# EUROPÄISCHE PATENTSCHRIFT

(11) **EP 3 758 964 B1**
(45) Veröffentlichungstag und Bekanntmachung des Hinweises auf die Patenterteilung: **19.06.2024**
(21) Anmeldenummer: 19707322.4
(22) Anmeldetag: 19.02.2019
(51) Int. Cl.: B60H 1/34, F24F 13/14

(54) **LÜFTUNGSVORRICHTUNG FÜR EIN KRAFTFAHRZEUG**
VENTILATION DEVICE FOR A MOTOR VEHICLE
DISPOSITIF DE VENTILATION POUR UN VÉHICULE AUTOMOBILE

(30) Priorität: 01.03.2018 DE 102018203076
(43) Veröffentlichungstag der Anmeldung: 06.01.2021
(73) Patentinhaber: VOLKSWAGEN AKTIENGESELLSCHAFT, 38440 Wolfsburg (DE)
(72) Erfinder: OTHMER, Carsten, 38106 Braunschweig (DE)
(74) Vertreter: Bals & Vogel Patentanwälte PartGmbB
(86) Internationale Anmeldenummer: PCT/EP2019/054050
(87) Internationale Veröffentlichungsnummer: WO 2019/166274

(56) Entgegenhaltungen:
- DE-A1-102015 109 069
- JP-A- S62 228 833
- JP-U- H0 198 011

## Beschreibung

Die vorliegende Erfindung betrifft eine Lüftungsvorrichtung für ein Kraftfahrzeug, mittels welcher ein Luftstrom in eine Fahrgastzelle des Kraftfahrzeugs gezielt sowie gerichtet einströmbar ist. Ferner betrifft die vorliegende Erfindung ein Kraftfahrzeug, welches eine erfindungsgemäße Lüftungsvorrichtung aufweist.

Es sind viele unterschiedliche Lüftungsvorrichtungen zum Belüften von Kraftfahrzeugen bekannt. Besonders verbreitet sind Lüftungsvorrichtungen mit verstellbaren Lamellen zum gezielten Ablenken des Luftstroms. Solche Lüftungsvorrichtungen weisen üblicherweise einen Lüftungskanal mit einem Kanalende sowie einen am Kanalende angeordneten Luftauslass mit einer Mehrzahl von verstellbaren Lamellen auf. Die verstellbaren Lamellen sind oftmals zu einem Teil vertikal und zu einem anderen Teil horizontal ausgerichtet, um den Luftstrom in viele unterschiedliche Richtungen umlenken zu können. Andere bekannte Lüftungsvorrichtungen weisen einen verschwenkbaren Luftauslass mit feststehenden oder auch zusätzlich verschwenkbaren Lamellen auf. Der Luftauslass ist zumindest teilweise kugelförmig ausgebildet, um ein seitliches Ausströmen der Luft am Luftauslass vorbei zu verhindern und um den Luftstrom in viele unterschiedliche Richtungen umlenken zu können. Bei anderen Lüftungsvorrichtungen ist der Luftauslass gemäß einer schwenkbaren Düse ausgebildet, mittels welcher der Luftstrom gebündelt und ebenfalls in mehrere unterschiedliche Richtungen umlenkbar ist.

Aus der DE 102 02 926 A1 ist eine Lüftungsvorrichtung für ein Kraftfahrzeug bekannt, welche einen Luftkanal sowie einen Luftauslass aufweist, wobei der Luftkanal mit dem Luftauslass fluidkommunizierend gekoppelt ist. Innerhalb des Luftauslasses sind mehrere um verschiedene Schwenkachsen verschwenkbare Lamellen zum Umlenken eines durch den Luftkanal strömenden Hauptluftstroms angeordnet. Zum Verschwenken der Lamellen weist die Lüftungsvorrichtung einen mit den Lamellen mechanisch gekoppelten Hebel auf, welcher aus dem Luftauslass herausragt. Die DE 10 2015 120 290 A1 offenbart eine Lüftungsvorrichtung für ein Kraftfahrzeug, mit einem Luftkanal sowie einem Luftauslass, wobei der Luftkanal mit dem Luftauslass fluidkommunizierend gekoppelt ist. Innerhalb des Luftauslasses ist eine um eine horizontale Achse schwenkbare Lamelle angeordnet. Durch Verschwenken der Lamelle ist ein durch den Luftkanal strömender Hauptluftstrom umlenkbar.

Die DE 10 2015 116 242 B3 zeigt eine Lüftungsvorrichtung für ein Kraftfahrzeug, welche einen Hauptlüftungskanal sowie zwei Nebenluftkanäle aufweist, welche allesamt mit einem gemeinsamen Luftkanal fluidkommunizierend gekoppelt sind. Im Bereich vor dem Luftauslass ist der Hauptlüftungskanal gemäß einer Lavaldüse ausgebildet. Mittels einer Ventilvorrichtung ist ein Luftstromanteil der Nebenkanäle beeinflussbar. Luftaustrittsöffnungen der Nebenkanäle sind aufeinander sowie auf den Hauptlüftungskanal gerichtet, sodass durch Beaufschlagen eines Nebenkanals mit einem Nebenluftstrom eine gezielte Ablenkung des Hauptluftstroms bewirkbar ist.

Lüftungsvorrichtungen mit von außen zugänglichen, verstellbaren Lamellen haben den Nachteil, dass im Bereich der Fahrgastzelle bewegliche Teile angeordnet sind, welche durch eine Unachtsamkeit eines Insassen des Kraftfahrzeugs ungewollt verstellt werden können. Ferner sind verstellbare Lamellen nur aufwändig herstellbar sowie montierbar und weisen einen gewissen Verschleiß auf. Lüftungsvorrichtungen mit mehreren Nebenkanälen, deren Luftaustrittsöffnungen aufeinander gerichtet sind, haben den Nachteil, dass diese eine hohe Geräuschentwicklung aufweisen können und somit den Fahrkomfort des Kraftfahrzeugs erheblich mindern können.

Die Druckschriften JP S62 228833 A, DE 10 2015 109069 A1 und JP H01 98011 U offenbaren gattungsgemäße Lüftungsvorrichtungen.

Es ist Aufgabe der vorliegenden Erfindung, die voranstehend beschriebenen Nachteile bei einer Lüftungsvorrichtung für ein Kraftfahrzeug sowie bei einem Kraftfahrzeug mit einer Lüftungsvorrichtung zu beheben oder zumindest teilweise zu beheben. Es ist insbesondere Aufgabe der vorliegenden Erfindung, eine Lüftungsvorrichtung für ein Kraftfahrzeug und ein Kraftfahrzeug mit einer Lüftungsvorrichtung zu schaffen, die auf eine einfache sowie kostengünstige Art und Weise eine Bereitstellung eines gerichteten Luftstroms in einer Fahrgastzelle des Kraftfahrzeugs gewährleisten und dabei vorzugsweise eine übermäßige Geräuschentwicklung vermeiden.

Voranstehende Aufgabe wird durch eine Lüftungsvorrichtung mit den Merkmalen des unabhängigen Anspruchs 1 sowie durch ein Kraftfahrzeug mit den Merkmalen des abhängigen Anspruchs 9 gelöst. Vorteilhafte Ausgestaltungen der Erfindung ergeben sich aus den Unteransprüchen.

Dabei gelten Merkmale und Details, die im Zusammenhang mit der erfindungsgemäßen Lüftungsvorrichtung beschrieben sind, selbstverständlich auch im Zusammenhang mit dem erfindungsgemäßen Kraftfahrzeug. Gemäß einem ersten Aspekt der Erfindung wird die Aufgabe durch eine Lüftungsvorrichtung für ein Kraftfahrzeug mit den Merkmalen des unabhängigen Anspruchs 1 gelöst. Die Lüftungsvorrichtung weist einen ersten Lüftungskanal zum Durchströmen eines ersten Luftstroms, einen vom ersten Lüftungskanal getrennten, zweiten Lüftungskanal zum Durchströmen eines zweiten Luftstroms und einen mit einem ersten Kanalende des ersten Lüftungskanals sowie einem zweiten Kanalende des zweiten Lüftungskanals fluidkommunizierend gekoppelten Luftauslass zum Auslassen eines Gesamtluftstroms in eine Fahrgastzelle des Kraftfahrzeugs auf. Der Gesamtluftstrom weist den ersten Luftstrom und den zweiten Luftstrom auf. Eine erste Luftstromstärke des ersten Luftstroms und eine zweite Luftstromstärke des zweiten Luftstroms sind individuell einstellbar. Erfindungsgemäß weist der Luftauslass in Strömungsrichtung hinter dem ersten Kanalende eine erste Ablenkwand auf, wobei die erste Ablenkwand zum derartigen Ablenken des ersten Luftstroms ausgebildet ist, dass der erste Luftstrom den zweiten Luftstrom kreuzt.

Der erste Lüftungskanal und der zweite Lüftungskanal sind vorzugsweise als Lüftungskanäle mit jeweils einem nicht verstellbaren Querschnitt ausgebildet. Der erste Lüftungskanal und der zweite Lüftungskanal sind voneinander vorzugsweise derart getrennt, dass ein direkter Luftaustausch zwischen dem ersten Lüftungskanal und dem zweiten Lüftungskanal nicht möglich ist. Vorzugsweise sind der erste Lüftungskanal und der zweite Lüftungskanal durch eine gemeinsame Trennwand voneinander getrennt, wobei die Trennwand vorzugsweise als starre, also nicht verstellbare oder verschwenkbare Trennwand ausgebildet ist. Alternativ zu einer Trennwand kann auch ein dritter Lüftungskanal zwischen dem ersten Lüftungskanal und dem zweiten Lüftungskanal angeordnet sein. Weiter bevorzugt sind der erste Lüftungskanal und der zweite Lüftungskanal parallel zueinander angeordnet, wobei das erste Kanalende und das zweite Kanalende vorzugsweise ebenfalls in dieselbe Richtung weisen. Demnach sind der erste Lüftungskanal und der zweite Lüftungskanal vorzugsweise derart ausgebildet, dass ein das erste Kanalende verlassender erster Luftstrom parallel zu einem das zweite Kanalende verlassenden zweiten Luftstrom strömt. Der erste Lüftungskanal und/oder der zweite Lüftungskanal weisen vorzugsweise einen runden, halbrunden oder ähnlichen Kanalquerschnitt auf. Die Trennwand ist vorzugsweise plattenförmig bzw. flach mit einer länglichen Erstreckung in Strömungsrichtung ausgebildet. Vorzugsweise ist die Lüftungsvorrichtung derart ausgebildet, dass im eingebauten Zustand der erste Lüftungskanal oberhalb des zweiten Lüftungskanals angeordnet ist.

Der Luftauslass ist in Strömungsrichtung hinter dem ersten Kanalende und dem zweiten Kanalende angeordnet. Der Luftauslass ist ausgebildet, den ersten Luftstrom und den zweiten Luftstrom zu dem Gesamtluftstrom zusammenzuführen. Hierfür weist der Luftauslass erfindungsgemäß in Strömungsrichtung hinter dem ersten Kanalende die erste Ablenkwand auf.

Die erste Ablenkwand ist vorzugsweise direkt am ersten Kanalende angeordnet und besonders bevorzugt als Fortsetzung einer ersten Kanalwand des ersten Lüftungskanals ausgebildet. Besonders bevorzugt ist die erste Ablenkwand derart an die erste Kanalwand angebunden, dass eine möglichst laminare Anströmung der ersten Ablenkwand gewährleistet ist. Somit ist die erste Ablenkwand vorzugsweise im Bereich der Anbindung an die erste Kanalwand abgerundet ausgebildet und weist demnach eine erste Abrundung auf. Diese erste Abrundung ist vorzugsweise zum zweiten Luftstrom hin ausgebildet. Überdies ist der Luftauslass ausgebildet, den Gesamtluftstrom, welcher den ersten Luftstrom und den zweiten Luftstrom aufweist, in die Fahrgastzelle des Kraftfahrzeugs zu leiten. Der Luftauslass weist vorzugsweise keine beweglichen Bauteile, wie z.B. verschwenkbare oder verdrehbare Flügel, Klappen, Lamellen, Düsen oder dergleichen, auf.

Die Lüftungsvorrichtung ist ferner ausgebildet, die erste Luftstromstärke des ersten Luftstroms und die zweite Luftstromstärke des zweiten Luftstroms individuell zu steuern. Das bedeutet, dass bei vordefinierter erster Luftstromstärke unterschiedliche zweite Luftstromstärken einstellbar sind. Ebenso sind bei vordefinierter zweiter Luftstromstärke unterschiedliche erste Luftstromstärken einstellbar. Demnach sind die erste Luftstromstärke und die zweite Luftstromstärke im Rahmen der technischen Leistung der Lüftungsvorrichtung im Wesentlichen frei voneinander wählbar. Hierfür kann erfindungsgemäß vorgesehen sein, dass die Lüftungsvorrichtung für den ersten Lüftungskanal und den zweiten Lüftungskanal jeweils eine separate Ventilationsvorrichtung zum Erzeugen eines Luftstroms aufweist, welche separat voneinander ansteuerbar sind. Alternativ kann die Lüftungsvorrichtung eine gemeinsame Ventilationsvorrichtung zum Erzeugen eines Hauptluftstroms aufweisen, welcher auf den ersten Lüftungskanal und den zweiten Lüftungskanal aufteilbar ist.

Eine erfindungsgemäße Lüftungsvorrichtung hat gegenüber herkömmlichen Lüftungsvorrichtungen den Vorteil, dass mit einfachen Mitteln sowie auf eine kostengünstige Art und Weise ein gerichteter Gesamtluftstrom in der Fahrgastzelle des Kraftfahrzeugs erzeugbar ist, wobei eine Richtung sowie eine Stärke des Gesamtluftstroms durch eine gezielte Steuerung der ersten Luftstromstärke und der zweiten Luftstromstärke steuerbar ist. Bei gleicher erster Luftstromstärke und zweiter Luftstromstärke ist der Gesamtluftstrom parallel zum ersten Lüftungskanal und zweiten Lüftungskanal ausgerichtet. Durch relatives Verändern der ersten Luftstromstärke zur zweiten Luftstromstärke ist der Gesamtluftstrom entsprechend ablenkbar. Wenn der erste Lüftungskanal über dem zweiten Lüftungskanal angeordnet ist, und die erste Luftstromstärke relativ zur zweiten Luftstromstärke erhöht wird, wird der Gesamtluftstrom somit nach unten abgelenkt. Zusätzliche Flügel, Klappen, Lamellen, Düsen oder dergleichen sind demnach nicht erforderlich, sodass Material- sowie Montagekosten einsparbar sind. Überdies ist eine unbeabsichtigte Verstellung der Strömungsrichtung des Gesamtluftstroms somit leicht vermeidbar. Ein weiterer Vorteil der Lüftungsvorrichtung ist, dass durch das Umlenken des ersten Luftstroms hinter dem ersten Kanalende eine Geräuschbildung aufgrund von Strömungsgeräuschen gering ist.

Gemäß einer bevorzugten Weiterentwicklung der Erfindung kann bei Lüftungsvorrichtungen vorgesehen sein, dass die erste Ablenkwand eine erste Wölbung aufweist, wobei die erste Wölbung in Strömungsrichtung vom zweiten Luftstrom weggerichtet ist. Die erste Wölbung ist vorzugsweise an eine zum zweiten Luftstrom hinweisende Abrundung der ersten Ablenkwand angeschlossen, sodass die erste Ablenkwand zunächst zum zweiten Luftstrom hingeführt ist und sich anschließend von diesem abwendet. Die erste Wölbung weist vorzugsweise einen ersten Wölbungsradius auf, welcher mindestens doppelt so groß, besonders bevorzugt mindestens dreimal so groß, wie ein erster Rundungsradius der ersten Abrundung ausgebildet ist. Auf diese Weise wird eine laminare Strömung des Gesamtluftstroms aus erstem Luftstrom und zweitem Luftstrom mit einfachen Mitteln verbessert. Überdies ist durch die erste Wölbung eine Geräuschbildung aufgrund von Strömungsgeräuschen weiter reduzierbar.

Es ist erfindungsgemäß bevorzugt, dass der Luftauslass in Strömungsrichtung hinter dem zweiten Kanalende eine zweite Ablenkwand aufweist, wobei die zweite Ablenkwand zum Ablenken des zweiten Luftstroms zum ersten Luftstrom hin ausgebildet ist. Die zweite Ablenkwand ist vorzugsweise direkt am zweiten Kanalende angeordnet und besonders bevorzugt als Fortsetzung einer zweiten Kanalwand des zweiten Lüftungskanals ausgebildet. Besonders bevorzugt ist die zweite Ablenkwand derart an die zweite Kanalwand angebunden, dass eine möglichst laminare Anströmung der zweiten Ablenkwand gewährleistet ist. Somit ist die zweite Ablenkwand vorzugsweise im Bereich der Anbindung an die zweite Kanalwand abgerundet ausgebildet und weist demnach eine zweite Abrundung auf. Diese zweite Abrundung ist vorzugsweise zum ersten Luftstrom hin ausgebildet. Vorzugsweise ist die zweite Ablenkwand spiegelbildlich zur ersten Ablenkwand ausgebildet. Eine zweite Ablenkwand hat den Vorteil, dass eine Zusammenführung des ersten Luftstroms und des zweiten Luftstroms verbessert ist. Zudem wird hierdurch ein Strömungsquerschnitt des Luftauslasses weiter reduziert, sodass eine gezielte Ablenkbarkeit des Gesamtluftstroms bei geringer Geräuschbildung aufgrund von Strömungsgeräuschen mit einfachen Mitteln sowie kostengünstig verbessert ist.

Weiter bevorzugt weist die zweite Ablenkwand eine zweite Wölbung auf, wobei die zweite Wölbung in Strömungsrichtung vom ersten Luftstrom weggerichtet ist. Die zweite Wölbung ist vorzugsweise an eine zum ersten Luftstrom hinweisende Abrundung der zweiten Ablenkwand angeschlossen, sodass die zweite Ablenkwand zunächst zum ersten Luftstrom hingeführt ist und sich anschließend von diesem abwendet. Die zweite Wölbung weist vorzugsweise einen zweiten Wölbungsradius auf, welcher mindestens doppelt so groß, besonders bevorzugt mindestens dreimal so groß, wie ein zweiter Rundungsradius der zweiten Abrundung ausgebildet ist. Vorzugsweise weist der Luftauslass durch die erste Wölbung und die zweite Wölbung einen Querschnitt gemäß einer Lavaldüse auf. Auf diese Weise wird eine laminare Strömung des Gesamtluftstroms aus erstem Luftstrom und zweitem Luftstrom mit einfachen Mitteln verbessert. Überdies ist durch die zweite Wölbung eine Geräuschbildung aufgrund von Strömungsgeräuschen weiter reduzierbar.

Erfindungsgemäß ist vorgesehen, dass der Luftauslass eine Ansaugvorrichtung zum Ansaugen des Gesamtluftstroms und/oder eine Ausblasvorrichtung zum Erzeugen eines mit dem Gesamtluftstrom interagierenden Ausblasluftstroms aufweist. Die Ansaugvorrichtung ist in Strömungsrichtung hinter einem engsten Luftauslassquerschnitt des Luftauslasses angeordnet und ist vorzugsweise in Richtung einer Mittelachse des Luftauslasses gerichtet. Somit ist ein effizientes Ansaugen des Gesamtluftstroms mittels eines Ansaugluftstroms verbessert. Die Ausblasvorrichtung ist in Strömungsrichtung hinter dem engsten Luftauslassquerschnitt des Luftauslasses angeordnet und ist vorzugsweise in Richtung der Mittelachse des Luftauslasses gerichtet. Alternativ kann die Ausblasvorrichtung auch von der Mittelachse wegweisen und den Gesamtluftstrom somit mittels des Coanda-Effekts ablenken. Auf diese Weise ist ein effizientes Ablenken des Gesamtluftstroms mittels des Ausblasluftstroms verbessert. Eine Ansaugvorrichtung sowie eine Ausblasvorrichtung haben den Vorteil, dass ein gezieltes Ablenken des Gesamtluftstroms mit einfachen Mitteln sowie kostengünstig verbesserbar ist.

Vorzugsweise weisen der erste Lüftungskanal einen ersten Kanaleinlass und der zweite Lüftungskanal einen zweiten Kanaleinlass auf, wobei der erste Kanaleinlass und der zweite Kanaleinlass mit einem gemeinsamen Hauptlüftungskanal derart fluidkommunizierend gekoppelt sind, dass ein den Hauptlüftungskanal in Strömungsrichtung durchströmender Hauptluftstrom in den ersten Kanaleinlass und/oder den zweiten Kanaleinlass leitbar ist. Der Hauptlüftungskanal ist vorzugsweise parallel bzw. zumindest in einem Endabschnitt parallel zu dem ersten Lüftungskanal bzw. dem zweiten Lüftungskanal angeordnet. Über den Hauptlüftungskanal ist ein Hauptluftstrom bereitstellbar, welcher auf den ersten Lüftungskanal und den zweiten Lüftungskanal aufteilbar ist. Durch die gezielte Festlegung einer Strömungsgeschwindigkeit des Hauptluftstroms sowie eines Aufteilungsverhältnisses des Hauptluftstroms auf den ersten Lüftungskanal und den zweiten Lüftungskanal sind somit die erste Luftstromstärke sowie die zweite Luftstromstärke auf vorteilhafte Weise sowie mit einfachen Mitteln gezielt einstellbar.

Es ist zudem bevorzugt, dass die Lüftungsvorrichtung eine Luftstromsteuervorrichtung aufweist, wobei die Luftstromsteuervorrichtung ausgebildet ist, eine Aufteilung des durch den Hauptlüftungskanal strömenden Hauptluftstroms auf den ersten Lüftungskanal und den zweiten Lüftungskanal gezielt zu steuern. Die Luftstromsteuervorrichtung ist vorzugsweise ausgebildet, einen effektiven Strömungsquerschnitt des ersten Kanaleinlasses und des zweiten Kanaleinlasses gezielt einzustellen. Hierfür kann vorgesehen sein, dass die Luftstromsteuervorrichtung beispielsweise ein erstes Steuerventil und ein zweites Steuerventil aufweist, wobei das erste Steuerventil zum Verschließen und Freigeben des ersten Lüftungskanals und das zweite Steuerventil zum Verschließen und Freigeben des zweiten Lüftungskanals ausgebildet sind. Das erste Ventil und das zweite Ventil können unabhängig voneinander ausgebildet oder miteinander mechanisch gekoppelt sein. Eine Luftstromsteuervorrichtung hat den Vorteil, dass hiermit eine gezielte Aufteilung des Hauptluftstroms auf den ersten Lüftungskanal und den zweiten Lüftungskanal verbessert ist.

Es ist weiter bevorzugt, dass die Luftstromsteuervorrichtung eine bewegliche Klappe zum Aufteilen des Hauptluftstroms auf den ersten Lüftungskanal und den zweiten Lüftungskanal aufweist. Die bewegliche Klappe ist vorzugsweise dem ersten Kanaleinlass und dem zweiten Kanaleinlass benachbart innerhalb des Hauptlüftungskanals angeordnet. Vorzugsweise ist eine Schwenkachse der Klappe an einer den ersten Lüftungskanal und den zweiten Lüftungskanal separierenden Trennwand angeordnet. Ein freies Ende der Klappe ragt vorzugsweise entgegen der Strömungsrichtung in den Hauptlüftungskanal hinein. Mittels der Klappe sind die Strömungsquerschnitte des ersten Kanaleinlasses sowie des zweiten Kanaleinlasses veränderbar und der Hauptluftstrom auf den ersten Lüftungskanal und den zweiten Lüftungskanal gezielt aufteilbar. Vorzugsweise ist die Klappe derart ausgebildet, in einer ersten Extremstellung den ersten Kanaleingang und in einer zweiten Extremstellung den zweiten Kanaleingang vollständig zu verschließen. Es kann erfindungsgemäß vorgesehen sein, dass die Klappe beispielsweise in einem Randbereich eine umlaufende Dichtung aufweist, um ein Abdichten des ersten Kanaleinlasses und des zweiten Kanaleinlasses zu verbessern. Eine Klappe hat den Vorteil, dass mit einfachen Mitteln sowie kostengünstig eine gezielte Aufteilung des Hauptluftstroms auf den ersten Lüftungskanal und den zweiten Lüftungskanal gewährleistet ist.

Es ist weiter bevorzugt, dass der Luftauslassquerschnitt des Luftauslasses in Strömungsrichtung eine Verjüngung sowie eine Aufweitung aufweist. Vorzugsweise ist der Luftauslassquerschnitt gemäß einer Lavaldüse ausgebildet. Mittels der Verjüngung ist ein effizientes Zusammenführen des ersten Luftstroms und des zweiten Luftstroms verbessert. Durch die Aufweitung ist eine Ablenkung des Gesamtluftstroms verbessert sowie eine Geräuschbildung aufgrund von Strömungsgeräuschen reduziert.

Gemäß einem zweiten Aspekt der Erfindung wird die Aufgabe durch ein Kraftfahrzeug mit den Merkmalen des abhängigen Anspruchs 9 gelöst.

Erfindungsgemäß ist die Lüftungsvorrichtung als erfindungsgemäße Lüftungsvorrichtung ausgebildet. Überdies mündet der Luftauslass der Lüftungsvorrichtung in die Fahrgastzelle. Der Luftauslass ist dabei vorzugsweise derart zur Fahrgastzelle angeordnet, dass bei gleicher erster Luftstromstärke und zweiter Luftstromstärke der Gesamtluftstrom in eine Neutralrichtung geleitet wird, wobei diese Neutralrichtung in einer Mitte zwischen einer maximalen oberen bestimmungsgemäßen Gesamtströmungsrichtung und einer maximalen unteren Gesamtströmungsrichtung angeordnet ist.

Bei dem beschriebenen Kraftfahrzeug ergeben sich sämtliche Vorteile, die bereits zu einer Lüftungsvorrichtung gemäß dem ersten Aspekt der Erfindung beschrieben worden sind. Demnach hat das erfindungsgemäße Kraftfahrzeug gegenüber herkömmlichen Kraftfahrzeugen den Vorteil, dass mit einfachen Mitteln sowie auf eine kostengünstige Art und Weise ein gerichteter Gesamtluftstrom in der Fahrgastzelle des Kraftfahrzeugs erzeugbar ist, wobei eine Richtung sowie eine Stärke des Gesamtluftstroms durch eine gezielte Steuerung der ersten Luftstromstärke und der zweiten Luftstromstärke steuerbar ist. Bei gleicher erster Luftstromstärke und zweiter Luftstromstärke ist der Gesamtluftstrom parallel zum ersten Lüftungskanal und zweiten Lüftungskanal ausgerichtet. Durch relatives Verändern der ersten Luftstromstärke zur zweiten Luftstromstärke ist der Gesamtluftstrom entsprechende ablenkbar. Wenn der erste Lüftungskanal über dem zweiten Lüftungskanal angeordnet ist, und die erste Luftstromstärke relativ zur zweiten Luftstromstärke erhöht wird, wird der Gesamtluftstrom somit nach unten abgelenkt. Zusätzliche Flügel, Klappen, Lamellen, Düsen oder dergleichen sind demnach nicht erforderlich, sodass Material- sowie Montagekosten einsparbar sind. Überdies ist eine unbeabsichtigte Verstellung der Strömungsrichtung des Gesamtluftstroms somit leicht vermeidbar. Ein weiterer Vorteil des erfindungsgemäßen Kraftfahrzeugs ist, dass durch das Umlenken des ersten Luftstroms hinter dem ersten Kanalende eine Geräuschbildung der Lüftungsvorrichtung aufgrund von Strömungsgeräuschen gering ist.

Eine erfindungsgemäße Lüftungsvorrichtung sowie ein erfindungsgemäßes Kraftfahrzeug werden nachfolgend anhand von Zeichnungen näher erläutert. Es zeigen jeweils schematisch:
- Figur 1: in einer Schnittdarstellung eine bevorzugte Ausführungsform einer erfindungsgemäßen Lüftungsvorrichtung,
- Figur 2: in einer Schnittdarstellung einen Auslassbereich einer bevorzugten zweiten Ausführungsform einer erfindungsgemäßen Lüftungsvorrichtung,
- Figur 3: in einer Schnittdarstellung einen Auslassbereich einer bevorzugten dritten Ausführungsform einer erfindungsgemäßen Lüftungsvorrichtung, und
- Figur 4: in einer Seitenansicht eine bevorzugte Ausführungsform eines erfindungsgemäßen Kraftfahrzeugs.

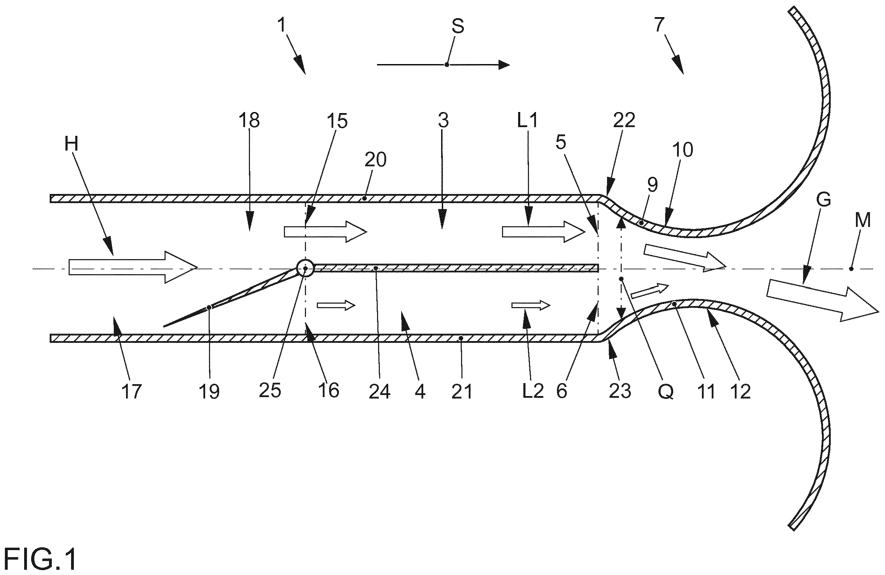

Elemente mit gleicher Funktion und Wirkungsweise sind in den Fig. 1 bis 4 jeweils mit denselben Bezugszeichen versehen.

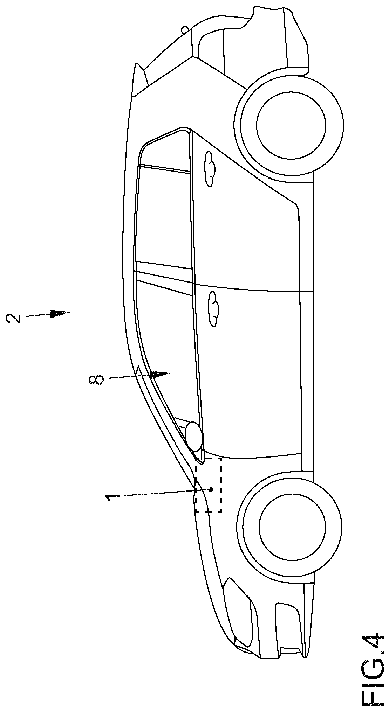

In Fig. 1 ist eine bevorzugte erste Ausführungsform einer erfindungsgemäßen Lüftungsvorrichtung 1 für ein Kraftfahrzeug 2 (vgl. Fig. 4) schematisch in einer Schnittdarstellung abgebildet, wobei keine Ansaugvorrichtung (13) und keine Ausblasvorrichtung (14) gezeigt sind. Die Lüftungsvorrichtung 1 weist einen ersten Lüftungskanal 3 mit einem ersten Kanaleinlass 15 sowie einem ersten Kanalende 5 und einen zweiten Lüftungskanal 4 mit einem zweiten Kanaleinlass 16 sowie einem zweiten Kanalende 6 auf. Der erste Lüftungskanal 3 und der zweite Lüftungskanal 4 sind durch eine Trennwand 24 voneinander fluiddicht getrennt. Der erste Lüftungskanal 3 ist in radialer Richtung durch eine erste Kanalwand 20 und der zweite Lüftungskanal 4 durch eine zweite Kanalwand 21 fluiddicht begrenzt. In Strömungsrichtung S ist vor dem ersten Kanaleinlass 15 und dem zweiten Kanaleinlass 16 ein Hauptlüftungskanal 17 ausgebildet. Der Hauptlüftungskanal 17 ist in radialer Richtung durch die erste Kanalwand 20 und die zweite Kanalwand 21 fluiddicht begrenzt. In Strömungsrichtung S auf Höhe des ersten Kanaleinlasses 15 und des zweiten Kanaleinlasses 16 ist eine Luftstromsteuervorrichtung 18 zum gezielten Aufteilen eines durch den Hauptlüftungskanal 17 strömenden Hauptluftstroms H auf den ersten Lüftungskanal 3 und den zweiten Lüftungskanal 4 angeordnet. Die Luftstromsteuervorrichtung 18 weist eine Schwenkvorrichtung 25 und eine an der Schwenkvorrichtung 25 gehaltene Klappe 19 auf. Die Schwenkvorrichtung 25 ist an der Trennwand 24 angeordnet. Die Klappe 19 ragt in den Hauptlüftungskanal 17 hinein. Durch Verschwenken der Klappe 19 um die Schwenkvorrichtung 25 ist der Hauptluftstrom H in einen durch den ersten Lüftungskanal 3 strömenden ersten Luftstrom L1 und einen durch den zweiten Lüftungskanal 4 strömenden zweiten Luftstrom L2 aufteilbar. In dieser Darstellung ist ein von der Schwenkvorrichtung 25 distales Ende der Klappe 19 der zweiten Kanalwand 21 zugewandt, sodass ein größerer Teil des Hauptluftstroms H in den ersten Lüftungskanal 3 und ein kleinerer Teil des Hauptluftstroms H in den zweiten Lüftungskanal 4 strömt.

An dem ersten Kanalende 5 und dem zweiten Kanalende 6 ist ein Luftauslass 7 der Lüftungsvorrichtung 1 angeordnet. Der Luftauslass 7 weist eine erste Ablenkwand 9 auf, die an die erste Kanalwand 20 angebunden ist. Die erste Ablenkwand 9 weist der ersten Kanalwand 20 unmittelbar benachbart eine erste Abrundung 22 auf, welche zum zweiten Luftstrom L2 hin gekrümmt ist. Auf die erste Abrundung 22 folgt in Strömungsrichtung S eine erste Wölbung 10 der ersten Ablenkwand 9, die von dem zweiten Luftstrom L2 weg gekrümmt ist. Die erste Ablenkwand 9 ist somit ausgebildet, den ersten Luftstrom L1 zum zweiten Luftstrom L2 hin abzulenken. Ferner weist der Luftauslass 7 eine zweite Ablenkwand 11 auf, die an die zweite Kanalwand 21 angebunden ist. Die zweite Ablenkwand 11 weist der zweiten Kanalwand 21 unmittelbar benachbart eine zweite Abrundung 23 auf, welche zum ersten Luftstrom L1 hin gekrümmt ist. Auf die zweite Abrundung 23 folgt in Strömungsrichtung S eine zweite Wölbung 12 der zweiten Ablenkwand 11, die von dem ersten Luftstrom L1 weg gekrümmt ist. Die zweite Ablenkwand 11 ist somit ausgebildet, den zweiten Luftstrom L2 zum ersten Luftstrom L1 hin abzulenken. In diesem Ausführungsbeispiel ist der Luftauslass 7 um eine Mittelachse M spiegelsymmetrisch ausgebildet. Ein Luftauslassquerschnitt Q des Luftauslasses 7 verjüngt sich in Strömungsrichtung S vom ersten Kanalende 5 und zweiten Kanalende 6 bis zu einem Minimum und weitet sich anschließend wieder auf. Somit ist der Luftauslass 7 ungefähr gemäß einer Lavaldüse ausgebildet. Im Luftauslass 7 werden der erste Luftstrom L1 und der zweite Luftstrom L2 zu einem Gesamtluftstrom G zusammengeführt.

In Fig. 1 ist aufgrund der Stellung der Klappe 19 der erste Luftstrom L1 größer als der zweite Luftstrom L2. Da der erste Luftstrom L1 von der ersten Ablenkwand 9 in dieser Darstellung nach unten abgelenkt wird und stärker als der zweite Luftstrom L2 ausgebildet ist, strömt der den Luftauslass 7 verlassende Gesamtluftstrom G ebenfalls nach unten. Ein weiteres Bewegen der Klappe 19 zur zweiten Kanalwand 21 hin würde einen Anteil des in den ersten Luftkanal 3 strömenden Hauptluftstroms H weiter erhöhen, somit einen Anteil des in den zweiten Lüftungskanal 4 strömenden Hauptluftstroms H entsprechen reduzieren und eine stärkere Ablenkung des Gesamtluftstroms G weiter nach unten bewirken. Ebenso würde ein Bewegen der Klappe 19 zur ersten Kanalwand 20 hin einen Anteil des in den ersten Luftkanal 3 strömenden Hauptluftstroms H reduzieren, somit einen Anteil des in den zweiten Lüftungskanal 4 strömenden Hauptluftstroms H entsprechend erhöhen und eine stärkere Ablenkung des Gesamtluftstroms G weiter nach oben bewirken.

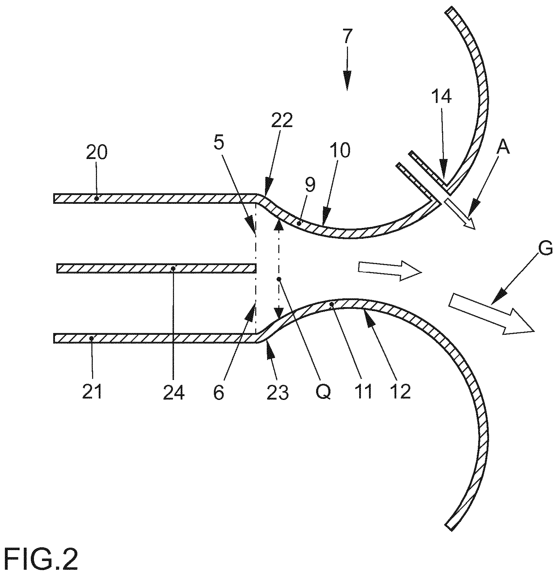

In Fig. 2 ist ein Auslassbereich einer bevorzugten zweiten Ausführungsform einer erfindungsgemäßen Lüftungsvorrichtung 1 schematisch in einer Schnittdarstellung abgebildet. In dieser zweiten Ausführungsform der erfindungsgemäßen Lüftungsvorrichtung 1 ist in einem oberen Bereich des Luftauslasses 7 hinter dem engsten Luftauslassquerschnitt Q eine Ausblasvorrichtung 14 zum Ausblasen eines Ausblasluftstroms A angeordnet. Die Ausblasvorrichtung 14 ist zum Ausblasen des Ausblasluftstroms A in Richtung des Gesamtluftstroms G - bzw. in Richtung des ersten Luftstroms L1 / des zweiten Luftstroms L2 - ausgebildet. Durch Ausblasen des Ausblasluftstroms A wird der Gesamtluftstrom G weiter abgelenkt.

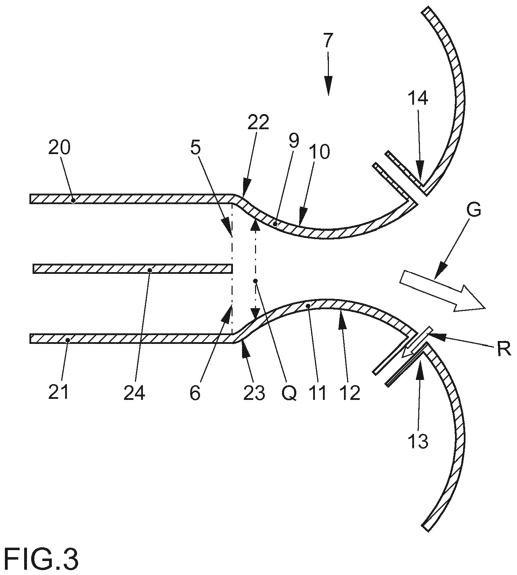

In Fig. 3 ist ein Auslassbereich einer bevorzugten dritten Ausführungsform einer erfindungsgemäßen Lüftungsvorrichtung 1 schematisch in einer Schnittdarstellung abgebildet. In dieser dritten Ausführungsform der erfindungsgemäßen Lüftungsvorrichtung 1 ist in einem unteren Bereich des Luftauslasses 7 hinter dem engsten Luftauslassquerschnitt Q eine Ansaugvorrichtung 13 zum Ansaugen des Gesamtluftstroms G mittels eines Ansaugluftstroms R angeordnet. Zudem ist in einem oberen Bereich des Luftauslasses 7 hinter dem engsten Luftauslassquerschnitt Q ebenfalls eine Ausblasvorrichtung 14 zum Ausblasen eines Ausblasluftstroms A angeordnet. Erfindungsgemäß können nahezu beliebig Ansaugvorrichtungen 13 und Ausblasvorrichtungen 14 an dem Luftauslass 7 angeordnet sein. Ferner kann eine nicht dargestellte Ablenkvorrichtung vorgesehen sein, welche sowohl als Ansaugvorrichtung 13 als auch als Ausblasvorrichtung 14 ausgebildet ist. Eine bevorzugte Position einer solchen Ablenkvorrichtung entspricht einer Position der dargestellten Ansaugvorrichtung 13 oder Ausblasvorrichtung 14.

Fig. 4 zeigt eine bevorzugte Ausführungsform eines erfindungsgemäßen Kraftfahrzeugs 2 schematisch in einer Seitenansicht. Das Kraftfahrzeug 2 weist eine Fahrgastzelle 8 sowie eine erfindungsgemäße Lüftungsvorrichtung 1 auf.

### Bezugszeichenliste

- 1: Lüftungsvorrichtung
- 2: Kraftfahrzeug
- 3: erster Lüftungskanal
- 4: zweiter Lüftungskanal
- 5: erstes Kanalende
- 6: zweites Kanalende
- 7: Luftauslass
- 8: Fahrgastzelle
- 9: erste Ablenkwand
- 10: erste Wölbung
- 11: zweite Ablenkwand
- 12: zweite Wölbung
- 13: Ansaugvorrichtung
- 14: Ausblasvorrichtung
- 15: erster Kanaleinlass
- 16: zweiter Kanaleinlass
- 17: Hauptlüftungskanal
- 18: Luftstromsteuervorrichtung
- 19: Klappe
- 20: erste Kanalwand
- 21: zweite Kanalwand
- 22: erste Abrundung
- 23: zweite Abrundung
- 24: Trennwand
- 25: Schwenkvorrichtung

- A: Ausblasluftstrom
- G: Gesamtluftstrom
- H: Hauptluftstrom
- L1: erster Luftstrom
- L2: zweiter Luftstrom
- M: Mittelachse
- Q: Luftauslassquerschnitt
- R: Ansaugluftstrom
- S: Strömungsrichtung

## Patentansprüche

1. Lüftungsvorrichtung (1) für ein Kraftfahrzeug (2), aufweisend einen ersten Lüftungskanal (3) zum Durchströmen eines ersten Luftstroms (L1), einen vom ersten Lüftungskanal (3) getrennten, zweiten Lüftungskanal (4) zum Durchströmen eines zweiten Luftstroms (L2) und einen mit einem ersten Kanalende (5) des ersten Lüftungskanals (3) sowie einem zweiten Kanalende (6) des zweiten Lüftungskanals (4) fluidkommunizierend gekoppelten Luftauslass (7) zum Auslassen eines Gesamtluftstroms (G) in eine Fahrgastzelle (8) des Kraftfahrzeugs (2), wobei der Gesamtluftstrom (G) den ersten Luftstrom (L1) und den zweiten Luftstrom (L2) aufweist, wobei eine erste Luftstromstärke des ersten Luftstroms (L1) und eine zweite Luftstromstärke des zweiten Luftstroms (L2) individuell einstellbar sind,
wobei der Luftauslass (7) in Strömungsrichtung (S) hinter dem ersten Kanalende (5) eine erste Ablenkwand (9) aufweist, wobei die erste Ablenkwand (9) zum derartigen Ablenken des ersten Luftstroms (L1) ausgebildet ist, dass der erste Luftstrom (L1) den zweiten Luftstrom (L2) kreuzt,
**dadurch gekennzeichnet,**
**dass** der Luftauslass (7) eine in Strömungsrichtung (S) hinter einem engsten Luftauslassquerschnitt (Q) des Luftauslasses (7) angeordnete Ansaugvorrichtung (13) zum Ansaugen des Gesamtluftstroms (G) und/oder eine in Strömungsrichtung (S) hinter dem engsten Luftauslassquerschnitt (Q) des Luftauslasses (7) angeordnete Ausblasvorrichtung (14) zum Erzeugen eines mit dem Gesamtluftstrom (G) interagierenden Ausblasluftstroms (A) aufweist.

2. Lüftungsvorrichtung (1) nach dem vorangehenden Anspruch,
**dadurch gekennzeichnet,**
**dass** die erste Ablenkwand (9) eine erste Wölbung (10) aufweist, wobei die erste Wölbung (10) in Strömungsrichtung (S) vom zweiten Luftstrom (L2) weggerichtet ist.

3. Lüftungsvorrichtung (1) nach einem der vorangehenden Ansprüche,
**dadurch gekennzeichnet,**
**dass** der Luftauslass (7) in Strömungsrichtung (S) hinter dem zweiten Kanalende (6) eine zweite Ablenkwand (11) aufweist, wobei die zweite Ablenkwand (11) zum Ablenken des zweiten Luftstroms (L2) zum ersten Luftstrom (L1) hin ausgebildet ist.

4. Lüftungsvorrichtung (1) nach Anspruch 3,
**dadurch gekennzeichnet,**
**dass** die zweite Ablenkwand (11) eine zweite Wölbung (12) aufweist, wobei die zweite Wölbung (12) in Strömungsrichtung (S) vom ersten Luftstrom (L1) weggerichtet ist.

5. Lüftungsvorrichtung (1) nach einem der vorangehenden Ansprüche,
**dadurch gekennzeichnet,**
**dass** der erste Lüftungskanal (3) einen ersten Kanaleinlass (15) und der zweite Lüftungskanal (4) einen zweiten Kanaleinlass (16) aufweisen, wobei der erste Kanaleinlass (15) und der zweite Kanaleinlass (16) mit einem gemeinsamen Hauptlüftungskanal (17) derart fluidkommunizierend gekoppelt sind, dass ein den Hauptlüftungskanal (17) in Strömungsrichtung (S) durchströmender Hauptluftstrom (H) in den ersten Kanaleinlass (15) und/oder in den zweiten Kanaleinlass (16) leitbar ist.

6. Lüftungsvorrichtung (1) nach Anspruch 5,
**dadurch gekennzeichnet,**
**dass** die Lüftungsvorrichtung (1) eine Luftstromsteuervorrichtung (18) aufweist, wobei die Luftstromsteuervorrichtung (18) ausgebildet ist, eine Aufteilung des durch den Hauptlüftungskanal (17) strömenden Hauptluftstroms (H) auf den ersten Lüftungskanal (3) und den zweiten Lüftungskanal (4) gezielt zu steuern.

7. Lüftungsvorrichtung (1) nach Anspruch 6,
**dadurch gekennzeichnet,**
**dass** die Luftstromsteuervorrichtung (18) eine bewegliche Klappe (19) zum Aufteilen des Hauptluftstroms (H) auf den ersten Lüftungskanal (3) und den zweiten Lüftungskanal (4) aufweist.

8. Lüftungsvorrichtung (1) nach einem der vorangehenden Ansprüche,
**dadurch gekennzeichnet,**
**dass** der Luftauslassquerschnitt (Q) des Luftauslasses (7) in Strömungsrichtung (S) eine Verjüngung sowie eine Aufweitung aufweist.

9. Kraftfahrzeug (2) mit einer Fahrgastzelle (8) und einer Lüftungsvorrichtung (1) zum Belüften der Fahrgastzelle (8),
**dadurch gekennzeichnet,**
**dass** die Lüftungsvorrichtung (1) nach einem der vorangehenden Ansprüche ausgebildet ist, wobei der Luftauslass (7) der Lüftungsvorrichtung (1) in die Fahrgastzelle (8) mündet.

## Claims

1. Ventilation device (1) for a motor vehicle (2), comprising a first ventilation duct (3) through which a first air flow (L1) flows, a second ventilation duct (4), which is separate from the first ventilation duct (3), through which a second air flow (L2) flows, and an air outlet (7) which is coupled in a fluid-communicating manner to a first duct end (5) of the first ventilation duct (3) and to a second duct end (6) of the second ventilation duct (4) for discharging a total air flow (G) into a passenger compartment (8) of the motor vehicle (2), the total air flow (G) comprising the first air flow (L1) and the second air flow (L2), a first air flow rate of the first air flow (L1) and a second air flow rate of the second air flow (L2) being individually adjustable,
the air outlet (7) comprising a first deflector wall (9) downstream of the first duct end (5) in the flow direction (S), the first deflector wall (9) being designed to deflect the first air flow (L1) in such a way that the first air flow (L1) crosses the second air flow (L2),
**characterized in that**
the air outlet (7) comprises an intake device (13) arranged downstream of a narrowest air outlet cross-section (Q) of the air outlet (7) in the flow direction (S) for intaking the total air flow (G) and/or an exhaust device (14) arranged downstream of the narrowest air outlet cross-section (Q) of the air outlet (7) in the flow direction (S) for generating an exhaust air flow (A) interacting with the total air flow (G).

2. Ventilation device (1) according to the preceding claim,
**characterized in that**
the first deflector wall (9) comprises a first curvature (10), the first curvature (10) being directed away from the second air flow (L2) in the flow direction (S).

3. Ventilation device (1) according to any of the preceding claims,
**characterized in that**
the air outlet (7) comprises a second deflector wall (11) downstream of the second duct end (6) in the flow direction (S), the second deflector wall (11) being designed to deflect the second air flow (L2) towards the first air flow (L1).

4. Ventilation device (1) according to claim 3,
**characterized in that**
the second deflector wall (11) comprises a second curvature (12), the second curvature (12) being directed away from the first air flow (L1) in the flow direction (S).

5. Ventilation device (1) according to any of the preceding claims,
**characterized in that**
the first ventilation duct (3) comprises a first duct inlet (15) and the second ventilation duct (4) comprises a second duct inlet (16), the first duct inlet (15) and the second duct inlet (16) being coupled to a common main ventilation duct (17) in a fluid-communicating manner, in such a way that a main air flow (H) flowing through the main ventilation duct (17) in the flow direction (S) can be directed into the first duct inlet (15) and/or into the second duct inlet (16).

6. Ventilation device (1) according to claim 5,
**characterized in that**
the ventilation device (1) comprises an air flow control device (18), the air flow control device (18) being designed to control a division of the main air flow (H) flowing through the main ventilation duct (17) between the first ventilation duct (3) and the second ventilation duct (4) in a targeted manner.

7. Ventilation device (1) according to claim 6,
**characterized in that**
the air flow control device (18) comprises a movable flap (19) for dividing the main air flow (H) between the first ventilation duct (3) and the second ventilation duct (4).

8. Ventilation device (1) according to any of the preceding claims,
**characterized in that**
the air outlet cross-section (Q) of the air outlet (7) is tapered and widened in the flow direction (S).

9. Motor vehicle (2) having a passenger compartment (8) and a ventilation device (1) for ventilating the passenger compartment (8),
**characterized in that**
the ventilation device (1) is designed according to any of the preceding claims, the air outlet (7) of the ventilation device (1) opening into the passenger compartment (8).

## Revendications

1. Dispositif de ventilation (1) pour un véhicule automobile (2), présentant un premier canal de ventilation (3) pour le passage d'un premier flux d'air (L1), un second canal de ventilation (4) séparé du premier canal de ventilation (3) pour le passage d'un second flux d'air (L2) et une sortie d'air (7) couplée en communication fluidique avec une première extrémité de canal (5) du premier canal de ventilation (3) ainsi qu'avec une seconde extrémité de canal (6) du second canal de ventilation (4) pour l'évacuation d'un flux d'air total (G) dans un habitacle (8) du véhicule automobile (2), dans lequel le flux d'air total (G) présente le premier flux d'air (L1) et le second flux d'air (L2), dans lequel une première intensité de flux d'air du premier flux d'air (L1) et une seconde intensité de flux d'air du second flux d'air (L2) sont réglables individuellement,
dans lequel la sortie d'air (7) présente une première paroi de déviation (9) en aval de la première extrémité de canal (5) dans le sens d'écoulement (S), dans lequel la première paroi de déviation (9) est conçue pour la déviation d'un premier flux d'air (L1) de telle sorte que le premier flux d'air (L1) croise le second flux d'air (L2),
**caractérisé en ce**
**que** la sortie d'air (7) présente un dispositif d'aspiration (13) disposé dans le sens d'écoulement (S) en aval d'une section transversale de sortie d'air (Q) la plus étroite de la sortie d'air (7) pour l'aspiration du flux d'air total (G) et/ou un dispositif de soufflage (14) disposé dans le sens d'écoulement (S) en aval de la section transversale de sortie d'air (Q) la plus étroite de la sortie d'air (7) pour la génération d'un flux d'air de soufflage (A) interagissant avec le flux d'air total (G).

2. Dispositif de ventilation (1) selon la revendication précédente,
**caractérisé en ce**
**que** la première paroi de déviation (9) présente une première courbure (10), dans lequel la première courbure (10) est orientée dans le sens d'écoulement (S) à l'opposé du second flux d'air (L2).

3. Dispositif de ventilation (1) selon l'une des revendications précédentes,
**caractérisé en ce**
**que** la sortie d'air (7) présente une seconde paroi de déviation (11) dans le sens d'écoulement (S) en aval de la seconde extrémité de canal (6), dans lequel la seconde paroi de déviation (11) est conçue pour la déviation du second flux d'air (L2) vers le premier flux d'air (L1).

4. Dispositif de ventilation (1) selon la revendication 3,
**caractérisé en ce**
**que** la seconde paroi de déviation (11) présente une seconde courbure (12), dans lequel la seconde courbure (12) est orientée dans le sens d'écoulement (S) à l'opposé du premier flux d'air (L1).

5. Dispositif de ventilation (1) selon l'une des revendications précédentes,
**caractérisé en ce**
**que** le premier canal de ventilation (3) présente une première entrée de canal (15) et le second canal de ventilation (4) une seconde entrée de canal (16), dans lequel la première entrée de canal (15) et la seconde entrée de canal (16) sont couplées en communication fluidique avec un canal de ventilation principal commun (17) de telle sorte qu'un flux d'air principal (H) traversant le canal de ventilation principal (17) dans le sens d'écoulement (S) peut être dirigé dans la première entrée de canal (15) et/ou dans la seconde entrée de canal (16).

6. Dispositif de ventilation (1) selon la revendication 5,
**caractérisé en ce**
**que** le dispositif de ventilation (1) présente un dispositif de commande de flux d'air (18), dans lequel le dispositif de commande de flux d'air (18) est conçu pour commander de manière ciblée une répartition du flux d'air principal (H) traversant le canal de ventilation principal (17) entre le premier canal de ventilation (3) et le second canal de ventilation (4).

7. Dispositif de ventilation (1) selon la revendication 6,
**caractérisé en ce**
**que** le dispositif de commande de flux d'air (18) présente un clapet mobile (19) pour la répartition du flux d'air principal (H) entre le premier canal de ventilation (3) et le second canal de ventilation (4).

8. Dispositif de ventilation (1) selon l'une des revendications précédentes,
**caractérisé en ce**
**que** la section transversale de sortie d'air (Q) de la sortie d'air (7) présente un rétrécissement ainsi qu'un élargissement dans le sens d'écoulement (S).

9. Véhicule automobile (2) comportant un habitacle (8) et un dispositif de ventilation (1) pour la ventilation de l'habitacle (8),
**caractérisé en ce**
**que** le dispositif de ventilation (1) est conçu selon l'une des revendications précédentes, dans lequel la sortie d'air (7) du dispositif de ventilation (1) débouche dans l'habitacle (8).
